# EUROPÄISCHE PATENTSCHRIFT

(11) **EP 0 507 820 B1**
(45) Veröffentlichungstag und Bekanntmachung des Hinweises auf die Patenterteilung: **22.09.1993**
(21) Anmeldenummer: 91901728.5
(22) Anmeldetag: 23.12.1990
(51) Int. Cl.: H01H 27/00, H01H 9/22

(54) **SICHERHEITSSCHALTER FÜR SCHUTZABDECKUNGEN ODER DERGLEICHEN**
SAFETY SWITCHES FOR SAFETY COVERS OR THE LIKE
DISJONCTEUR POUR CAPOTS PROTECTEURS OU ANALOGUES

(30) Priorität: 30.12.1989 DE 3943376
(43) Veröffentlichungstag der Anmeldung: 14.10.1992
(73) Patentinhaber: Klöckner-Moeller GmbH, 53115 Bonn (DE)
(72) Erfinder: HOSS, Michael, D-5300 Bonn 1 (DE); TRAPP, Ulrich, D-5300 Bonn 1 (DE); BRUCHSCHMIDT, Frank, D-5409 Dausenau (DE); BONN, Alfred, D-5330 Königswinter 1 (DE)
(74) Vertreter: Müller-Gerbes, Margot, Dipl.-Ing.
(86) Internationale Anmeldenummer: EP9002300
(87) Internationale Veröffentlichungsnummer: WO9110247

(56) Entgegenhaltungen:
- EP-A- 0 117 396
- EP-A- 0 129 253
- EP-A- 0 330 229

## Beschreibung

Die Erfindung bezieht sich auf einen Sicherheitsschalter zum zwangsweisen Abschalten der Stromzufuhr beim Entfernen einer Schutzabdeckung von einer Maschine oder dergleichen und Einschalten bei Schließen der Schutzabdeckung mittels eines mit der Schutzabdeckung fest verbundenen und mit dieser bewegbaren Betätigers mit in einem mehrteiligen Gehäuse untergebrachten elektrischen Kontakten und einem Stößel, der durch ein von dem durch eine Öffnung des Gehäuses eingreifenden Betätiger beaufschlagbares Antriebsorgan betätigbar ist, insbesondere eines mit dem Stößel in Wirkverbindung stehenden verdrehbar auf einer in dem Gehäuse gelagerten Welle angeordneten Schaltrades und mit einer federbelasteten Verriegelungseinrichtung für das Antriebsorgan zum Verhindern irregulärer Einschaltung des Schalters unter Umgehung des Betätigers bei entfernter Schutzabdeckung.

Bei derartigen Sicherheitsschaltern handelt es sich üblicherweise um Endschalter, die über einen Stößel angetrieben werden. Der Stößel wird dabei über ein Antriebsorgan so gesichert, daß er nur mittels unterschiedlich geformter Schlüssel, als Betätiger bezeichnet, betätigt werden kann. Die Aufgabe derartiger Sicherheitsschalter besteht darin, beispielsweise Schutzabdeckungen wie Türen, Klappen, Hauben, Schutzgitter von Maschinenmaschinen, wie Zentrifugen, Spritzgießmaschinen, Werkzeugmaschinen, Pressen, Fördermitteln usw., derart zu sichern, daß bei dem Öffnen der Schutzabdeckung die Stromzufuhr unterbrochen wird, und daß es mit üblichem Werkzeug nicht möglich ist, den Sicherheitsschalter bei geöffneter Schutzabdeckung zu schließen und die Maschine anlaufen zu lassen. Der Sicherheitsschalter ist dabei üblicherweise an der zu schützenden Maschine angebracht, während der Betätiger mit der Schutzabdeckung fest verbunden ist. Es sind verschiedene Lösungen derartiger Sicherheitsschalter bekannt. Aus der EP-OS 0117 396 ist ein gattungsgemäßer Sicherheitsschalter bekannt, bei dem der Stößel zum Öffnen und Schließen der Kontakte des Schalters über eine Steuerwalze betätigt wird. Um das Schließen des Schalters nur dann zu ermöglichen, wenn die Schutzabdeckung geschlossen wird, ist eine Verriegelung in Gestalt von zwei beiderseits der Steuerwalze auf deren Welle schwenkbar angeordneter Sperrscheiben vorgesehen. Erst nach dem Verschieben der Sperrscheiben durch den Betätiger ist es möglich, die so entsperrte Steuerwalze durch den Betätiger weiter zu verdrehen, um damit das Schließen der Kontakte des Schalters zu bewirken.

Ein weiterer bekannter Sicherheitsschalter gemäß EP-PS 0175 156 schlägt eine radial geteilte Steuerwalze mit zwei axial auseinanderspreizbaren Walzenteilen vor, wobei das Schließen der Kontakte des Schalters nur im auseinandergespreizten Zustand der beiden Walzenteile der Steuerwalze erfolgen kann. Das Auseinanderspreizen der beiden Walzenteile erfolgt durch Einschieben des Betätigers, der in entsprechende Ausnehmungen der Walzenteile eingreift und diese dabei seitlich zu seiner Bewegungsrichtung auseinanderspreizt entgegen der Rückstellkraft einer Druckfeder.

Sicherheitsschalter mit einer selbsttätig kraftschlüssigen Verbindung des Betätigers und des Antriebsorgans für den Stößel, die auch selbsttätig voneinander lösbar ausgebildet sind, sind beispielsweise aus der DE-OS 24 25 898 bekannt. Eine besondere Verriegelung des Betätigers durch zusätzliche Mittel erfolgt nicht, vielmehr findet die Verriegelung durch formschlüssiges Einrasten des Betätigers in der Steuerwalze statt. Ähnliche Ausführungen sind auch aus der DE-OS 31 00 862 bzw. AT-PS 234 956 bekannt.

Aus der EP-A 0330 299 ist ein gattungsgemäßer Sicherheitsschalter bekannt, der zusätzlich eine elektromagnetische Verriegelung aufweist. Die mechanische Verriegelung übergreift das Schaltrad nur teilweise und blockiert nur in einer Richtung.

Aus der DE-PS 33 09 372 ist ein Sicherheitsschalter bekannt geworden, dessen Antriebsorgan in der geöffneten Stellung der Schutzabdeckung und des Schalters durch einen Sperrstift gesichert ist, der erst durch den Betätiger aus der Sperrstellung herausgeschoben werden muß, um das Antriebsorgan für den Eingriff des Betätigers zum Einschalten des Schalters freizugeben.

Bei der Ausführung eines Sicherheitsschalters nach der EP-A 0129 253 erfolgt die Sperrung der Betätigungswalze mittels zusätzlicher Sperrscheiben, wobei die Betätigung des Schalters nur dann möglich ist, wenn Betätigungswalze und Sperrscheiben gleichzeitig verdreht werden.

Der Erfindung liegt die Aufgabe zugrunde, die bekannten Sicherheitsschalter in bezug auf die konstruktive Ausführung und Montagefreundlichkeit zu verbessern, dabei gleichzeitig eine größtmögliche Sicherheit gegen unvorschriftsmäßige Bedienung zu gewährleisten.

Erfindungsgemäß wird diese Aufgabe bei dem gattungsgemäßen Sicherheitsschalter gemäß den kennzeichnenden Merkmalen des Anspruches 1 gelöst. Erfindungsgemäß werden ausgehend von einem Schaltrad als Antriebsorgan mindestens zwei hiervon unabhängig gelagerte und verschiebbare Riegel in symmetrischer Anordnung zu dem Schaltrad vorgesehen. Damit ist die Sicherheit gegeben, daß selbst bei Ausfall eines Riegels mindestens der zweite Riegel noch die Sicherung gewährleistet. Der Zeitpunkt der Freigabe des Schaltrades, d.h. der Entsperrung, kann durch eine entsprechende Anordnung von Riegel und Betätiger bzw. Betätigereingriffsweg definiert werden und mit ausreichender Sicherheit innerhalb des den Sicherheitsschalter umgebenden Gehäuses verlegt werden.

Bei einer bevorzugten Ausführung wird die Blockierung des Schaltrades durch eine formschlüssige Verbindung zwischen Riegel und Schaltrad im Bereich der Stirnseiten des Schaltrades erreicht. Beispielsweise ist vorgesehen, daß im Bereich der Stirnseiten des Schaltrades Ausnehmungen vorgesehen sind, in die Riegel mit einem entsprechenden Vorsprung bzw. Rastnase eingreifen können. Die Riegel sperren dann das Schaltrad gegen weitere Verdrehung. Erst nach Entriegelung des Schaltrades, d.h. Entfernen der eingerasteten Riegel aus den Ausnehmungen des Schaltrades kann dieses wieder gedreht werden, was dann durch die Bewegung des Betätigers erfolgen kann. Das Verschieben der Riegel zum Entsperren erfolgt durch den Betätiger insbesondere in der Weise, daß die Riegel und der Betätiger an den einander zugewandten und in Wirkverbindung miteinander tretenden Flächen mit zueinander komplementären schrägen Gleitflächen ausgebildet sind, so daß die Riegel quer zur Bewegungsrichtung des Betätigers durch diesen auseinanderspreizbar bzw. aufeinander zu bewegbar sind. Die Riegel sind bevorzugt achsparallel zur Wellenachse des Schaltrades hin und her verschiebbar in dem Gehäuse angeordnet, bevorzugt im Bereich der der Wirkverbindung mit dem Stößel gegenüberliegenden Seite des Schaltrades. Die Gleitflächen an den Riegeln sind in Richtung auf die Stirnseiten des Schaltrades unter einem Winkel von 45° verlaufend ausgebildet, wobei die Gleitflächen sich senkrecht zur Bewegungsrichtung des Betätigers erstrecken. Sind mehrere Betätigungsrichtungen vorgesehen, so werden entsprechend zueinander versetzte Gleitflächen ausgebildet.

Die Wirkverbindung zwischen Schaltrad und Betätiger wird beispielsweise durch am Umfang des Schaltrades mindestens zwei sektorartig radial sich erstreckende Ausnehmungen zum Eingreifen des tangential auf das Schaltrad zu bewegbaren Betätigers in Verbindung mit einem rahmenartig ausgebildeten Betätiger erreicht. Der rahmenartig ausgebildete Betätiger weist einen sich parallel zur Wellenachse des Schaltrades erstreckenden Quersteg auf, der in die Ausnehmungen des Schaltrades eingreifend dieses verdrehen kann, entsprechend der Bewegungsrichtung des Betätigers. An den Ecken des Rahmens des Betätigers sind bevorzugt die Gleitflächen für die Riegel durch Abschrägung ausgebildet.

Zur weiteren Erhöhung der Sicherheit des Sicherheitsschalters gegen unbefugtes Betätigen ohne Benutzung des Betätigers wird vorgeschlagen, neben einem ersten symmetrisch zu beiden Seiten des Schaltrades angeordneten Riegelpaar ein zweites Riegelpaar parallel hierzu beispielsweise in einer darüber- oder darunterliegenden Ebene anzuordnen. Auch das zweite Riegelpaar, insgesamt also vier Riegel, wird von dem Betätiger bewegt. Beispielsweise ist der Betätiger hierzu zusätzlich zu dem rahmenartigen Mittelteil mit seitlich je einem Steg ausgerüstet, dessen vordere Kante als komplementäre Gleitfläche zu dem weiteren Paar von Riegeln abgeschrägt ausgebildet ist.

Bei dem erfindungsgemäßen Sicherheitsschalter wirkt das Schaltrad auf den Stößel des Schalters, wobei das Schaltrad durch den Betätiger angetrieben wird. Der Betätiger weist mindestens einen rahmenförmigen mittleren Bereich auf, der dafür vorgesehen ist, das Schaltrad anzutreiben, indem der Quersteg in einer Aussparung des Schaltrades greift. Voreilend hierzu werden seitlich am Schaltrad angeordnete Riegel verschoben, die federbelastet in das Schaltrad greifen und durch an dem Betätiger bzw. des Rahmen angeordnete Schrägen in die Entsperrungsposition geschoben werden. Als weitere Sicherheit sind zusätzlich noch zwei weitere Riegel vorgesehen, die durch zwei zusätzlich zu dem Rahmen des Betätigers in axialer Richtung am Betätiger angeordnete Stege in die entsperrte Position geschoben werden müssen.

Die Riegel können einzeln jeweils im Gehäuse unter Einwirkung einer Druckfeder gelagert sein, die die Riegel stets in Richtung auf das Schaltrad drücken. Es ist jedoch auch möglich, einem Paar Riegel eine gemeinsame Druckfeder anzuordnen, die beispielsweise diese übergreifend mit dem einen Ende auf dem einen Riegel und dem anderen Ende auf dem anderen Riegel angeordnet ist und somit auch das Bestreben hat, die Riegel zusammenzuführen und dabei stets in Richtung auf das dazwischen angeordnete Schaltrad zu drücken.

Je nachdem, wie die Wirkverbindung zwischen Schaltrad und Stößel ausgestaltet ist, kann das Schaltrad in einer Drehrichtung betätigt werden oder aber in zwei Drehrichtungen.

Eine besonders einfache Übertragung der Bewegung auf den Stößel ist möglich durch Herstellen der Wirkverbindung zwischen Schaltrad und Stößel mittels eines außermittig am Schaltrad angreifenden Pleuels. Das Schaltrad ist dann nur in einer Richtung zum Schließen bewegbar, so daß nur aus zwei zueinander senkrechten Richtungen eine Betätigung mittels Betätiger erfolgen kann. Um die Totpunktlage des Pleuels zu überwinden, ist vorgesehen, daß das Schaltrad mit einer koaxial zur Wellenachse des Schaltrades angeordneten Drehfeder ausgerüstet ist, die nur in der Totpunktlage des Pleuels wirksam ist und dieses bei Entriegelung beaufschlagt, so daß sich das Schaltrad bzw. Pleuel aus der Totpunktlage bewegt.

Bei nur zwei möglichen Betätigungsrichtungen, die zueinander senkrecht sind für den Betätiger, können die Riegel spiegelsymmetrisch als linker und rechter Riegel mit jeweils einer jeder Betätigungsrichtung zugeordneten Gleitfläche für den Betätiger ausgebildet sein, die gegeneinander um 90° versetzt sind, und zwar je eine auf jeder Seite der Riegelachse eines Riegels, wodurch eine in bezug auf die Riegelachse unsymmetrische Anordnung der Gleitflächen gegeben ist.

Um bei einem Schaltrad mit Übertragung der Schaltbewegung auf den Stößel mittels Pleuel weitere Betätigungsrichtungen zu ermöglichen, wird vorgeschlagen, daß der Stößel in einem die Kontakte tragenden Kontaktträger drehbar gelagert ist, und zwar drehbar um seine Längsachse. Nunmehr ist es möglich, das Schaltrad mitsamt dem die Öffnungen für die Betätiger tragenden Gehäusedeckel um 180° um die Stößelachse zu drehen, wodurch die Öffnungen für den Eingriff des Betätigers und das Schaltrad in zwei weiteren Betätigungsebenen zugänglich werden. Die Verriegelungseinrichtung wird ebenfalls mitgedreht.

Es ist auch möglich, die Wirkverbindung zwischen Schaltrad und Stößel mittels an dem Stößel drehbar auf einer in seitlich parallel zur Stößelbewegung verlaufenden Nuten des Gehäuses geführten Achse gelagerten Rollen herzustellen, die mit der über einen Teil des Umfanges des Schaltrades ausgebildeten drei Kalotten aufweisenden Kurvenbahn drei stabile Lagerzustände bilden, wobei das Schaltrad im Querschnitt betrachtet eine Symmetrieachse aufweist. Eine derartige Wirkverbindung zwischen Schaltrad und Stößel ermöglicht das Schalten des Schaltrades in beiden Drehrichtungen, so daß auch die Verriegelungseinrichtungen in Gestalt der Riegel symmetrisch zu der Riegelachse ausgebildet werden können. Um an jedem Riegelarm zwei zueinander senkrechte Bewegungsrichtungen eines Betätigers zu ermöglichen, wird vorgeschlagen, daß je zwei schräge zueinander um 90° versetzte Gleitflächen beidseitig der Riegelachse jedes Riegels ausgebildet sind.

Die Erfindung wird in der Zeichnung beispielhaft erläutert. Es zeigen:
- Figur 1a: schematische Darstellung eines Sicherheitsschalters in schematischer Ansicht in geöffnetem Zustand
- Figur 1b: eine schematische Ansicht des Sicherheitsschalters nach Figur 1a in geschlossenem Zustand
- Figur 2a: eine Aufsicht auf das Schaltrad mit einem Paar Riegel in entsperrter Position
- Figur 2b: einen Längsschnitt gemäß AB nach Figur 2a in schematischer Darstellung
- Figur 3: eine schematische Aufsicht auf das Schaltrad mit zwei Riegelpaaren
- Figur 4: einen Querschnitt CD nach Figur 3 in schematischer Darstellung
- Figur 5a-e: verschiedene Ansichten und Querschnitt eines Schaltrades für einen Sicherheitsschalter gemäß Figur 3 und 4
- Figur 6a-c: verschiedene Ansichten und Querschnitte eines Betätigers für einen Schalter gemäß Figur 3 und 4
- Figur 7a-d: verschiedene Ansichten eines Riegels für einen Schalter gemäß Figur 3 und 4
- Figur 8a-e: verschiedene Ansichten und Querschnitte eines zweiten Riegels für einen Schalter gemäß Figur 3 und 4
- Figur 9: einen perspektivischen Teilquerschnitt für einen Sicherheitsschalter gemäß Figur 2a und b
- Figur 10a-e: schematische Darstellung des Betätigungsweges des Betätigers zum Schaltrad
- Figur 11a: Explosionsdarstellung perspektivisch des Antriebes mit Schaltrad und Verriegelung mit einem Paar Riegel
- Figur 11b: Explosionsdarstellung eines Sicherheitsschalters mit einem Paar Riegel.

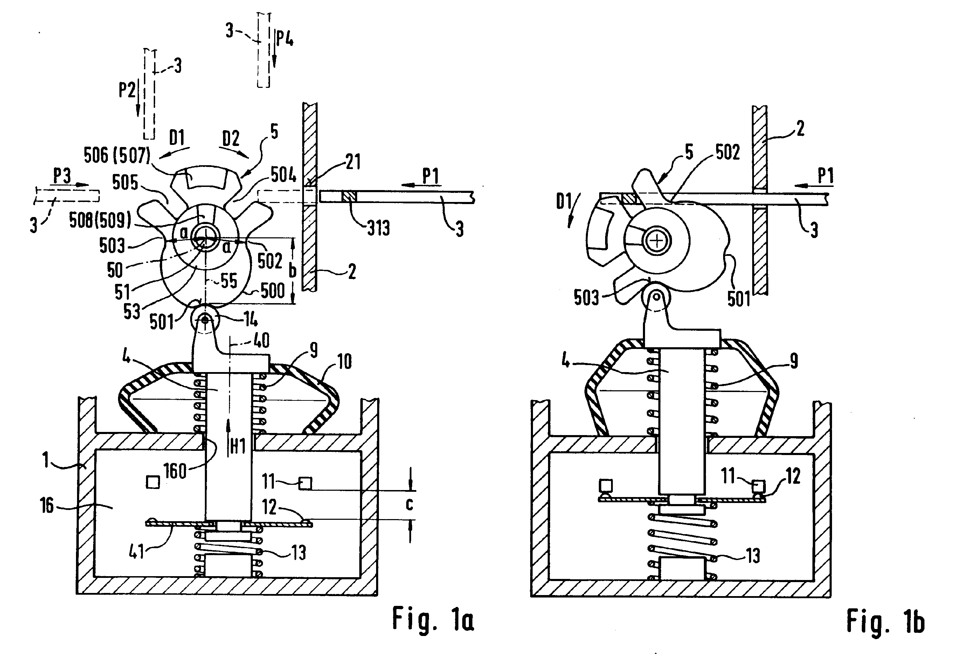

In der Figur 1a und b ist das Antriebsprinzip eines erfindungsgemäßen Sicherheitsschalters schematisch dargestellt. In einem mehrteiligen aus Deckel 2 und Gehäuseteilen zusammengesetzten Gehäuse 1 ist auf einer Welle 51 ein Schaltrad 5 drehbar um die Achse 50 gelagert. Das Schaltrad 5 steht mit dem Stößel 4 des Schalters über am Umfang in einer Kurvenbahn 500 des Schaltrades zwangsgeführte Rollen 14, die in dem Stößel gelagert sind, in Wirkverbindung. Die Wirkverbindung kann auch beispielsweise zwischen Stößel 4 und Schaltrad 5 mittels eines Pleuels hergestellt werden. Der Schalter mit den Kontakten 11, 12 ist in einem abgeschlossenen Schaltraum 16 des Gehäuses 1 untergebracht, in das der Stößel 4 durch die Öffnung 160 geführt ist. Die Kontaktbrücke 41 mit den beweglichen Kontakten 12 ist am Stößel 4 federnd gelagert. Der Stößel 4 ist gegenüber dem Schaltraum 16 mittels der Dichtung 10 im Bereich der Durchführung 160 abgedichtet. In der gezeigten Darstellung gemäß Figur 1a ist der Schalter geöffnet und die beweglichen Kontakte 12 sind von den Festkontakten 11 mit Abstand c abgehoben entgegen der im Bereich der Durchführung 160 des Stößels 4 und am Stößelende angeordneten Druckfedern 9, 13. Das Schaltrad 5 weist in seiner dem Stößel 4 zugewandten Hälfte am Umfang die mit drei Kalotten 501, 502, 503 ausgebildete etwa W-förmig abgerundete Kurvenbahn 500 auf, die durch die drei Kalotten drei stabile Lagerzustände des Stößels 4 in bezug auf das Schaltrad 5 gewährleistet. Die mittlere Kalotte 501 weist den Abstand b von der Wellenachse 50 des Schaltrades auf, die hierzu symmetrisch angeordneten seitlichen Kalotten 502 und 503 einen Abstand a von der Wellenachse 50, wobei die Differenz b minus a gleich c dem Hubweg zum Öffnen bzw. Schließen der Kontakte 11, 12 des Schalters entspricht. Auf dem restlichen Umfang des Schaltrades 5 sind zwei segmentartige radiale Schlitze 504, 505, die sich trichterförmig nach außen erweitern, ausgebildet. Das dargestellte Schaltrad 5 ist symmetrisch zu seiner senkrechten Achse 55 ausgebildet und in beiden Drehrichtungen D1, D2 schaltbar. Der mit der Schutzabdeckung, die hier nicht dargestellt ist, fest verbundene Betätiger 3, der hier schematisch teilweise dargestellt ist, ist durch eine Öffnung 21 des Deckels 2 des Gehäuses 1 in Pfeilrichtung P1 einführbar. Der Betätiger 3 weist in seinem vorderen stirnseitigen Bereich einen Quersteg auf, mit dem er in den Schlitz 504 des Schaltrades eingreifend dieses in Pfeilrichtung P1 um die Achse 50 verdrehen kann. In der Figur 1b ist die bei Betätigung des Betätigers 3, d.h. bei Schließen einer mit dem Betätiger 3 verbundenen Abdeckung in das Gehäuse des Sicherheitsschalters hineinbewegten Betätiger 3 zum Einschalten des Schalters 11, 12 eingeschaltete Stellung durch Verdrehen des Schaltrades 5 in Richtung D1 dargestellt. Bei der Drehung des Schaltrades 5 wird der Stößel über die Kurvenbahn von der Kalotte 501 in die Kalotte 502 geführt, wobei der Stößel sich um die Differenz b minus a in Pfeilrichtung H1, siehe Figur 1a, unter dem Druck der Federn 9, 13 bewegt und den Schalter 11, 12 schließt. In der geschlossenen Stellung gemäß Figur 1b ist wiederum ein stabiler Zustand erreicht. Die Betätigung des Schaltrades kann auch aus einer anderen Richtung erfolgen, beispielsweise der in der Figur 1a angedeuteten Richtung P2 oder der Richtung P3 oder P4, da das Schaltrad in beiden Richtungen, also auch D2, drehbar gelagert ist.

Die zusätzliche Verriegelung des Schaltrades im geöffneten Zustand des Schalters gemäß Figur 1a ist in den schematischen Darstellungen nach Figur 1a und 1b nicht gezeigt. Für diese Verriegelung ist das Schaltrad 5 an den Stirnseiten am Umfang mit beidseitigen Aussparungen 506, 507 und 508, 509 ausgebildet. Diese Aussparungen sind paarweise angeordnet und auf unterschiedlicher radialer Höhe durch die Abstufung 53 im Bereich gegenüberliegend der die Wirkverbindung mit dem Schaltrad zum Stößel herstellenden Bereich des Schaltrades. Bevorzugt sind die Aussparungen 506 bis 509 in einem Bereich am Umfang des Schaltrades angeordnet, der zwischen den beiden Schlitzen 504, 505 für den Eingriff des Betätigers 3 angeordnet ist. Diesen Aussparungen können Riegel zugeordnet werden.

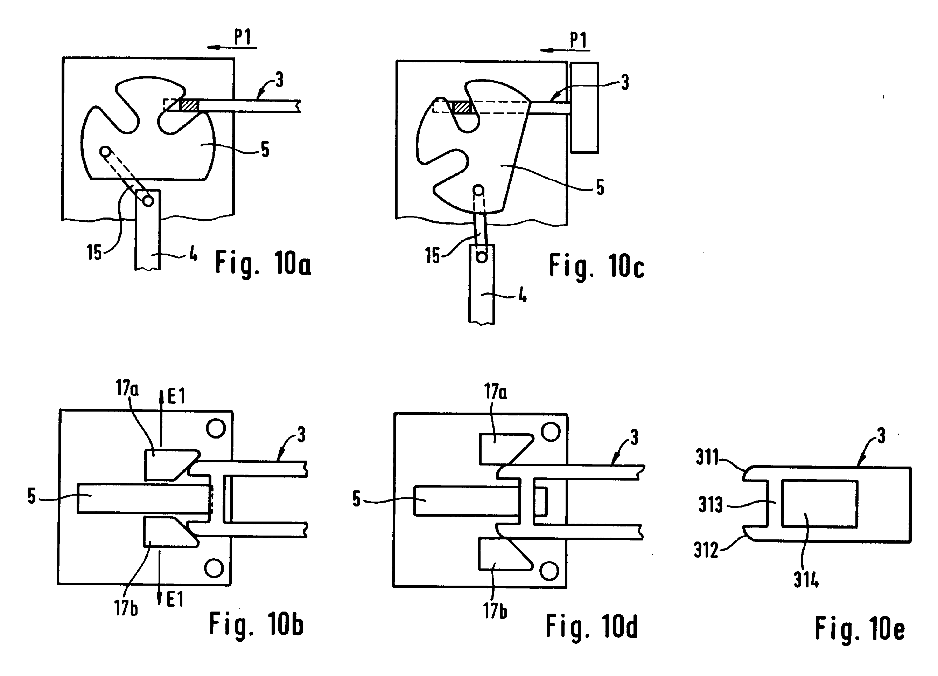

Ein rahmenartiger Betätiger, wie er beispielsweise zum Schalten des Schaltrades gemäß den Figuren 1a, 1b benutzt werden kann, ist schematisch in der Aufsicht der Figur 10e dargestellt. Der Betätiger greift mit dem Quersteg 313 in einen Schlitz 504 bzw. 505 des Schaltrades ein, wobei das Schaltrad teilweise in das Fenster 314 des Betätigers hineinragt, um dieses zu bewegen.

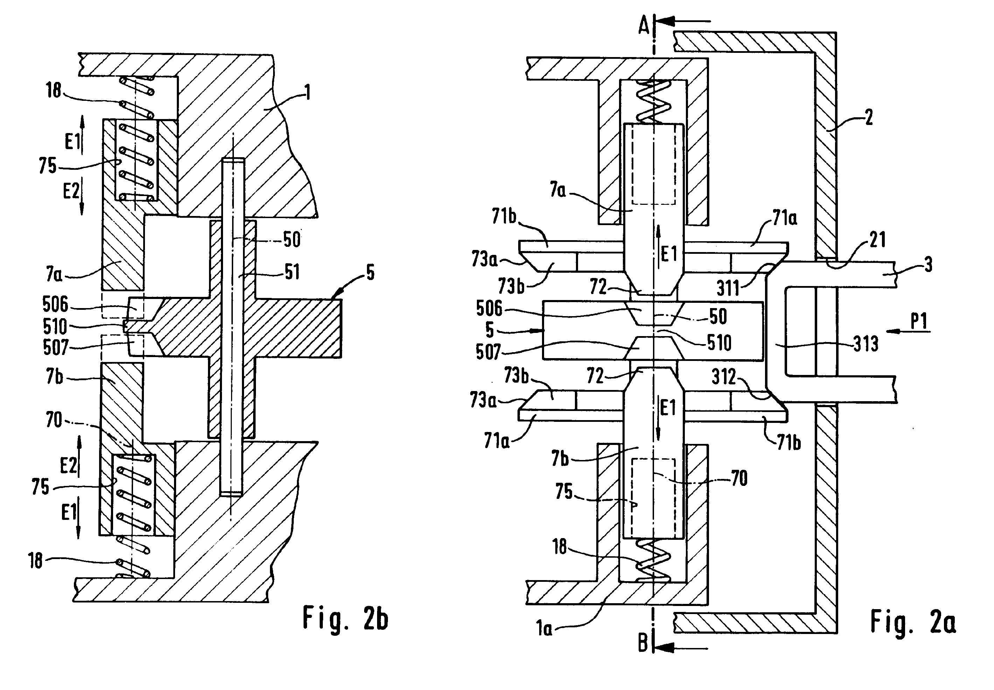

In den Figuren 2a und 2b ist der in den Figuren 1a, 1b dargestellte Antrieb mit einem Schaltrad in Verbindung mit einer Verriegelung in Gestalt eines symmetrisch zu beiden Stirnseiten des Schaltrades 5 angeordneten Paar Riegel 7a, 7b in der Aufsicht und im Längsschnitt des Schaltrades dargestellt. Da das Schaltrad nur mittels eines Paar Riegel 7a, 7b verriegelt wird, bedarf es auch nur eines Paares Aussparungen 506, 507, die am Umfang in dem auf der dem Stößel 4 abgewandten Bereich des Schaltrades 5 ausgebildet sind. In dem nach Figur 2a und 2b gezeigten Beispiel ist die Wirkverbindung zwischen Schaltrad und Stößel 4 nicht dargestellt. Die das Schaltrad 5 tragende Welle 51 ist in dem Gehäuse 1 gelagert. Parallel zur Wellenachse 50 auf der dem Stößel abgewandten Seite sind die Riegel 7a, 7b angeordnet und längs ihrer Achse 70 entgegen dem Druck je einer Feder 18 verschiebbar in dem Gehäuse 1 gelagert.

Die Federn 18 sind beispielsweise in Ausnehmungen 75 der Riegel 7a, 7b und am Gehäuse geführt. Zum Entsperren werden die Riegel in Pfeilrichtung E1 mittels des Betätigers 3, der in Pfeilrichtung P1 auf das Schaltrad zu bewegt wird, auseinandergeschoben, so daß sie aus der Ausnehmung 506, 507 des Schaltrades ausrasten und dieses für eine Drehbewegung freigeben, unter Zusammendrücken der Druckfedern 19. Beim Herausziehen des Betätigers 3 entgegen der Richtung P1 können die Riegel 7a und 7b unter dem Druck der Feder 18 sich in Richtung E2 bewegen, bis sie in der gestrichelten Stellung gemäß Figur 2b an dem Schaltrad-Zwischensteg 510 in den Aussparungen 506, 507 anliegend eingerastet sind. Die Riegel 7a, 7b können beispielsweise auf Führungsstegen des Gehäuses geführt sein. Die Riegel 7a, 7b weisen quer zu ihrer Längserstreckung ausgebildete Riegelarme 71a, 71b auf, die sich in der Ebene der Bewegungsrichtung des Betätigers 3 erstrecken. Die Riegelarme sind an ihren dem Betätiger 3 zugewandten Endflächen abgeschrägt ausgebildet, so daß schräge Gleitflächen 73a und 73b gebildet sind. Die Gleitflächen 73a, 73b sind gegeneinander um 90° versetzt an den Riegelarmen angeordnet, sie verlaufen jeweils schräg unter 45° auf die Stirnflächen des Schaltrades 5 zu bzw. unter 45° zu den Bewegungsrichtungen P1, P3 bzw. P2, P4 des Betätigers, die ebenfalls um 90° gegeneinander versetzt sind. Wenn das Schaltrad in beiden Drehrichtungen bewegbar, siehe Beispiels Figur 1a, und zu einer senkrechten Achse 55 symmetrisch aufgebaut ist, können vier Bewegungsrichtungen des Betätigers P1 bis P4 in symmetrischer Anordnung gemäß Figur 1a vorgesehen werden. Dann können auch die Riegel 7a, 7b zu ihrer Achse 70 symmetrisch ausgebildet werden, insbesondere in bezug auf die Anordnung der Gleitflächen, wie in Figur 2a,b schematisch dargestellt.

Für den Fall, daß nur zwei um 90° gegeneinander versetzte Bewegungsrichtungen P1, P2 gemäß Figur 1a für das Schaltrad 5 vorgesehen sind, wobei das Schaltrad in einer Drehrichtung schaltet, sind die Riegel 7a,b auf jeder Seite mit nur einer schrägen Gleitfläche 73a bzw. 73b, die in bezug aufeinander um 90° versetzt sind, entsprechend den beiden um 90° zueinander versetzten Bewegungsrichtungen P1,2 auszurüsten. In dem anderen Falle sind an den Riegeln 7a,b auf jeder Seite je zwei zueinander um 90° versetzte Gleitflächen 73a,b vorzusehen, nämlich jeweils für die beiden zueinander senkrechten Richtungen P1, P2 und P3, P4 des Betätigers.

Gemäß der Ausbildung von Figur 2a ist die Gleitfläche 73a dem in Richtung P1 bzw. P3 bewegbaren durch die Öffnung 21 des Gehäusedeckels einführbaren Betätiger 3 zugewandt. Der Betätiger 3 ist rahmenartig ausgebildet und weist stirnseitig den Quersteg 313 auf. Der Rahmen des Betätigers 3 ist an den stirnseitigen Ecken ebenfalls mit unter 45° abgeschrägten Ecken 311, 312 ausgebildet, die komplementär zu den Gleitflächen 73a der Riegelarme 7a,b verlaufen, so daß sie auf diese auftreffend die Riegel in Pfeilrichtung E1 auseinanderdrücken und parallel zur Wellenachse verschieben können. Wenn ein Betätiger 3 in Pfeilrichtung P4 bzw. P2, siehe Figur 1a, vorgesehen ist, so würde dieser analog ausgebildete Betätiger auf die schräge Gleitfläche 73b der Riegel treffen, die zu den Gleitflächen 73a um 90° versetzt angeordnet sind und ebenfalls das Verschieben der Riegel 7a,b in Pfeilrichtung E1 bewirken können. Die Gleitflächen 73a, 73b sind so groß bzw. lang ausgebildet, daß die Riegel 7a, 7b genügend weit in Richtung E1 von dem Schaltrad 5 durch den Betätiger 3 weggeschoben werden. Der Betätiger 3 gleitet dann in den zwischen den Riegelarmen 71a, b und den Stirnseiten des Schaltrades 5 freigegebenen Spalt, um das Schaltrad 5 zu betätigen.

Die Riegel 7a, 7b weisen an ihrem vorderen Ende einen zentralen Vorsprung 72 auf, beispielsweise als konusförmige Rastnase ausgebildet, mit der sie in die Aussparungen 506 bzw. 507 des Schaltrades 5 formschlüssig einrasten können. Der Betätiger 3 für einen Antrieb des Sicherheitsschalters gemäß Figur 2a und 2b mit Verriegelung durch zwei Riegel kann, wie in der Figur 10e in Aufsicht dargestellt, ausgebildet sein. Hierbei sind die in Wirkverbindung mit den beiden Gleitflächen 73a der Riegel 7a,b tretenden schrägen Gleitflächen 311, 312 neben dem Quersteg 313 an vorspringenden Stegen ausgebildet. Die Gleitflächen 311, 312 können auch leicht gerundet ausgeführt sein.

Das Schaltrad gemäß Figur 2a, 2b ist bei geöffneter Schutzabdeckung, d.h. bei außerhalb des Gehäusedeckels sich befindendem Betätiger 3, der das Schaltrad 5 freigegeben hat, und infolgedessen bei geöffnetem Schalter durch die dann in den Aussparungen 506, 507 des Schaltrades eingerasteten Riegel 7a, 7b blockiert, und gegen unbefugtes Betätigen bei geöffneter Schutzabdeckung, d.h. bei nicht eingeführtem Betätiger 3, gesichert. Es ist nicht möglich, beispielsweise mit einem Schraubenzieher durch die Öffnung 21 des Deckels in Schaltrad 5 einzugreifen und dieses zu drehen, da dieses durch die Riegel gesperrt ist. Es müßte also mit einem zweiten oder dritten Werkzeug unbefugt durch die Öffnung 21 in das Schaltergehäuse eingedrungen werden, um auch die Riegel zu entsperren, damit das Schaltrad und damit der Schalter betätigt werden kann.

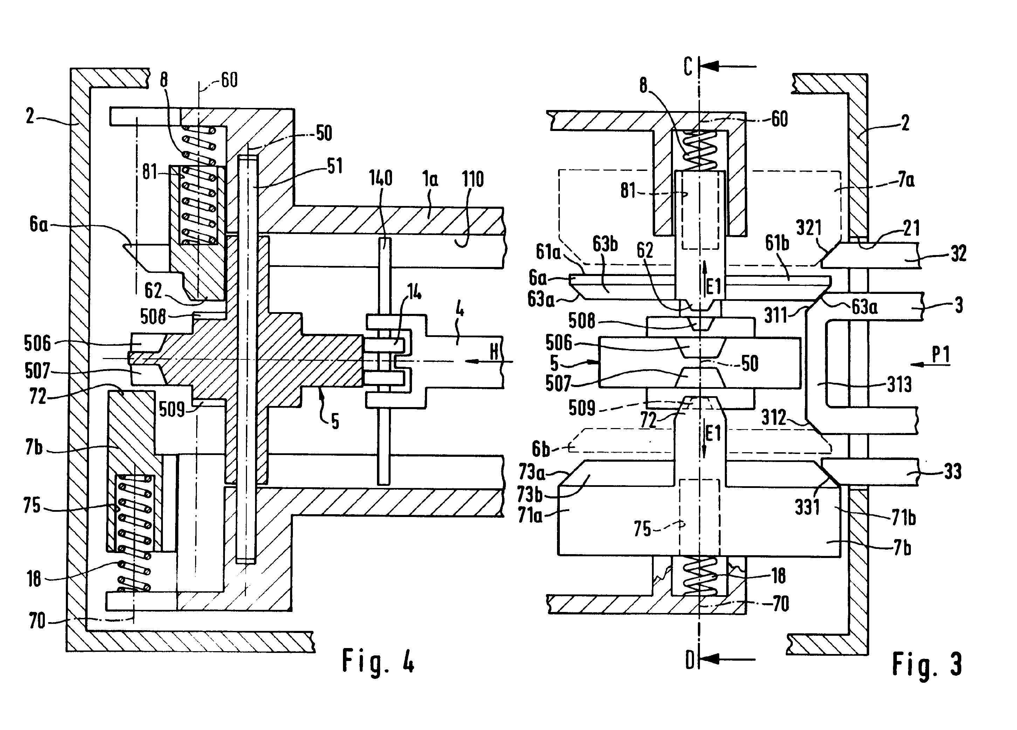

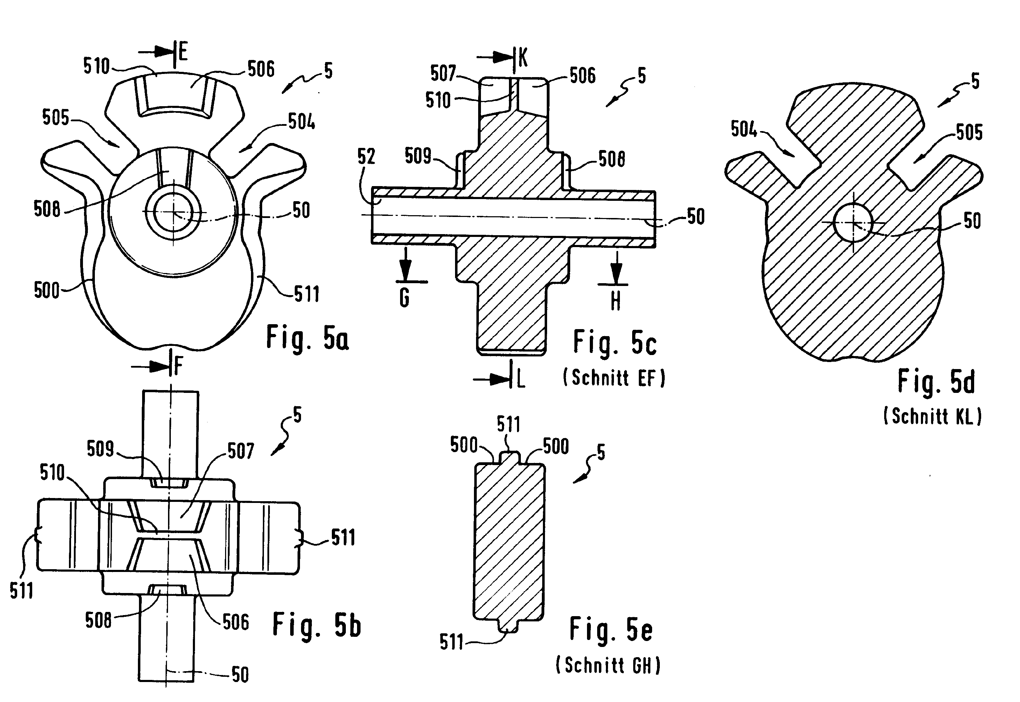

Eine weitere Erhöhung der Sicherheit gegen unbefugtes Betätigen des Sicherheitsschalters bzw. seines Antriebes, des Schaltrades, ist beispielhaft in den Figuren 3 und 4 für einen Antrieb gemäß Figur 1a, 1b dargestellt. Hierbei zeigt Figur 3 eine Aufsicht auf das Schaltrad 5 gemäß Figur 1a mit vierfacher Verriegelung durch zwei Paar beidseitig des Schaltrades 5 jeweils übereinander angeordneter Riegel 6a,b, 7a,b in schematischer Darstellung. Das Schaltrad 5 sowie die Verriegelung sind symmetrisch zur Wellenachse 50 funktional aufgebaut, des weiteren ist das Schaltrad für Betätigung in beiden Drehrichtungen D1,D2 ausgebildet. Figur 4 zeigt den Schnitt CD nach Figur 3 durch das Schaltrad 5 und die Riegel 6a,b;7a,b, wobei jeweils nur ein Riegel des jeweiligen Riegelpaares dargestellt ist. Zur Verriegelung durch vier Riegel ist das Schaltrad 5 mit vier Ausnehmungen 506, 507 bzw. 508, 509 an den Stirnseiten am Umfang, siehe auch Figur 1a, 1b, ausgerüstet. Die Ausnehmungen liegen auf unterschiedlichen Radien bzw. Abständen von der Wellenachse 50 des Schaltrades 5. Der Antrieb des Stößels 4 erfolgt über das Rollenpaar 14, das entlang einer Kurvenbahn 500 des Schaltrades zwangsgeführt wird, wobei die Rollen 14 über die Rollenachse 140 mit dem Stößel 4 verbunden sind und die Rollenachse 140 in seitlichen sich parallel zur Bewegungsrichtung des Stößels 4 erstreckenden Nuten 110 in dem Gehäuse 1 geführt ist. Damit ist die Betätigung des Schaltrades in beiden Drehrichtungen D1, D2 möglich und die Betätigung durch den Betätiger in den vier Richtungen P1 bis P4.

Es ist jeweils ein Riegelpaar 6a, 6b bzw. 7a, 7b beidseitig der Stirnseiten des Schaltrades 5 vorgesehen, wobei die Riegel 6a, 7a und 6b, 7b in Ebenen übereinander angeordnet sind, und ihre Verschiebeachsen 60, 70 vorzugsweise parallel zur Wellenachse 50 des Schaltrades verlaufen und vertikal übereinander angeordnet sind. Die Riegel sind jeweils entsprechend der komplementären Aussparungen 506, 507 bzw. 508,509 des Schaltrades mit einem darin einführbaren Vorsprung oder Rastnase 72 bzw. 62 ausgebildet. Die Riegel sind jeweils federbelastet mit Druckfedern 18 bzw. 8 in dem Gehäuse gelagert, wobei die Druckfedern bevorzugt in Ausnehmungen der Riegel geführt sind. Die Riegel 6a, 6b und 7a, 7b sind im Gehäuse in Führungsnuten oder auf Führungsstegen verschiebbar gelagert. Die Riegel 6a,b und 7a,b werden durch den Betätiger 3 entgegen der Federkraft der Druckfedern 8, 18 in eine das Schaltrad 5 entsperrende Position verschoben, und sind bei Nichteinwirkung des Betätigers 3, beispielsweise bei aus dem Gehäuse 3 entferntem Betätiger in die Ausnehmungen des Schaltrades 5 unter dem Druck der Federn 8, 18 eingerastet, wodurch dieses gesperrt ist gegen eine Verdrehbewegung.

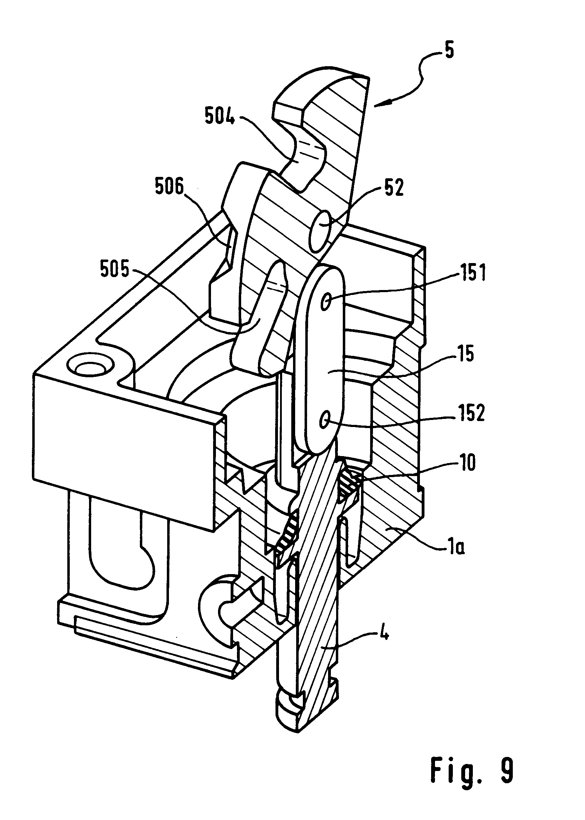

Beide Riegelpaare 6, 7 weisen quer zu ihren Bewegungsachsen 60, 70 sich erstreckende Riegelarme 61a, 61b und 71a, 71b auf, die, wie anhand der Figuren 2a, 2b erläutert, an ihren den Betätigern 3 zugewandten Stirnflächen mit abgeschrägten Gleitflächen 63a, 63b bzw. 73a, 73b ausgerüstet sind. Bevorzugt sind die schrägen Gleitflächen an den Riegelarmen der Riegel auf etwa gleicher Höhe ausgebildet, so daß ein Betätiger 3 in flacher Gestalt, der durch einen schmalen Schlitz 21 im Gehäuse bzw. Deckel 2 des Sicherheitsschalters einführbar ist, auf die Riegel einwirken kann. Es ist aber auch möglich, die Riegelarme mit den schrägen Flächen höhenmäßig gegeneinander zu versetzen und beispielsweise den Betätiger in U-Form auszubilden, so daß an dem Betätiger komplementäre schräge Gleitflächen ausgebildet werden, die dann bei Bewegung des Betätigers 3 in Pfeilrichtung P1, siehe Figur 3, auf die Riegel bzw. deren schräge Gleitflächen treffen und diese bei Schließen der Abdeckung und Eindrücken des Betätigers 3 in Pfeilrichtung E1 bewegen, bis das Schaltrad entsperrt ist und dann der Betätiger 3 mit dem Quersteg 313 in das Schaltrad eingreifend dieses bewegen kann und damit über die Hubbewegung H des Stößels den Schalter schließen kann.
Um entsprechend den vier Riegeln vier Gleitflächen an dem Betätiger 3 auszubilden, weist dieser beispielsweise neben einem mittleren rahmenartigen Teil mit vorderem Quersteg 313 mit abgeschrägten Ecken 311, 312 für die Bewegung des Riegels 6a, 6b zusätzlich zwei weitere seitliche Stege 32, 33 auf, die an ihren vorderen Stirnflächen ebenfalls mit Schrägen 331, 321 ausgebildet sind, mit denen sie in Wirkverbindung mit den komplementären Schrägen 73a der Riegel 7a, 7b treten können. Ein gemäß dem Prinzip der Figuren 3 und 4 ausgeführter Sicherheitsschalter mit Schaltrad und vier Riegeln zur Verriegelung des Schaltrades gewährleistet eine sehr hohe Sicherheit gegen unbefugtes Betätigen des Schaltrades bei geöffneter Schutzabdeckung, d.h. bei einem sich außerhalb des Eingriffs mit dem Schaltrad 5 insbesondere außerhalb des Schaltgehäuses 1, 2 befindenden Betätigers 3. In den Figuren 9 bis 11 wird eine Ausführung eines Sicherheitsschalters mit Schaltrad 5 und einem Paar Riegel als Verriegelungseinrichtung gemäß dem Prinzip der Figur 2 mit einer Drehrichtung des Schaltrades, bedingt durch die Wirkverbindung des Schaltrades mit dem Stößel über ein Pleuel dargestellt.

In der Figur 9 ist im Teilschnitt das Gehäuseteil 1a dargestellt, das den Antrieb mit Schaltrad 5 aufnimmt. Die Wirkverbindung zwischen Schaltrad 5 und Stößel 4 erfolgt über das Pleuel 15, das über Wellenachsen 151 bzw. 152 mit dem Schaltrad 5 bzw. dem Stößel 4 gelenkig verbunden ist. Der Stößel 4 wird abgedichtet, siehe Dichtung 10, durch eine Öffnung aus dem Gehäuseteil 1a in den sich in dem anschließenden nicht näher dargestellten Gehäuseteil befindenden Schaltraum mit den Kontakten geführt. Die dargestellte gestreckte Stellung von Stößel und Pleuel entspricht der geschlossenen Schalterstellung. Das im Teilschnitt dargestellte Schaltrad 5 weist am Umfang die Schlitze 504, 505 zum Einführen des Betätigers 3 auf. Des weiteren ist im Bereich zwischen den beiden Einsteckschlitzen 504, 505 am Umfang die Ausnehmung 506 vorgesehen bzw. nicht dargestellt 507 für den Eingriff der Riegel beim Sperren der Drehbewegung des Schaltrades.

In der Figur 10a bis e ist schematisch der Betätigungsvorgang zwischen Betätiger 3 und Schaltrad 5 zum Bewegen des Stößels 4 dargestellt. In der schematischen Darstellung nach Figur 10a und b befindet sich der Schalter noch im gesperrten und geöffneten Zustand. Der Betätiger 3 befindet sich auf dem Weg in Pfeilrichtung P1 in Anlage an die Riegel 17a,b, um diese in Pfeilrichtung E aus dem Eingriff mit dem Schaltrad zu entfernen. In der Aufsicht nach d ist der Betätiger 3 bereits zwischen Riegel 17a, 17b und Schaltrad vorgedrungen und hat somit das Schaltrad entriegelt. Bei weiterem Bewegen in Pfeilrichtung P1, siehe Figur 10c, wird das Schaltrad in die Endposition und damit gestreckte Position von Pleuel und Stößel bewegt, wodurch der Schalter geschlossen wird und in dieser Stellung stabil verbleibt.

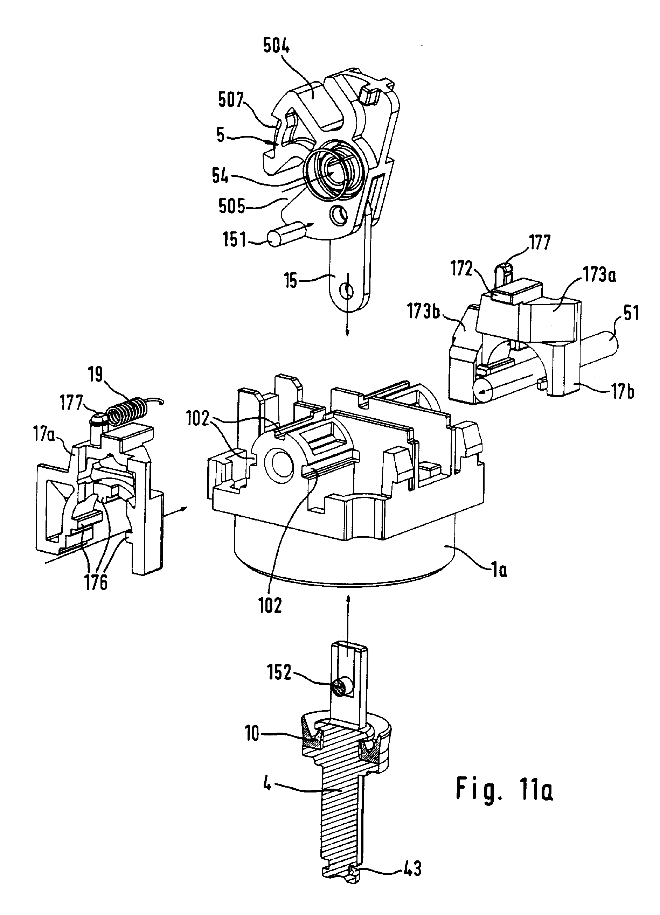

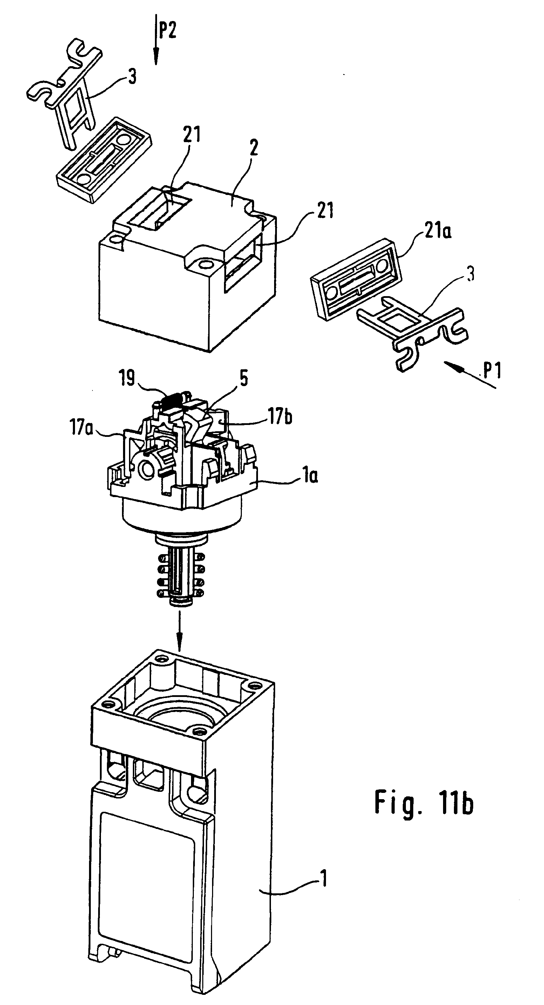

In der Figur 11a ist in Explosionsdarstellung eine Ausführung des Schaltrades mit Verriegelung für einen erfindungsgemäßen Sicherheitsschalter gemäß den Prinzipien der Figuren 2, 9 und 10 dargestellt. Das Schaltrad 5 ist nur für eine Drehrichtung zum Einschalten des Schalters vorgesehen und daher unsymmetrisch aufgebaut. Die Wirkverbindung mit dem Stößel 4 wird über das außermittig am Schaltrad 5 gelenkig mit Wellenbolzen 151 gelagerte Pleuel 15 hergestellt, das nur eine Schließrichtung für den Schalter zuläßt. Das Schaltrad 5 weist am Außenumfang zwei radiale Schlitze 504, 505 für den Eingriff des Betätigers aus zwei möglichen zueinander senkrechten Richtung P1, P2 auf. Am stirnseitigen Umfang des Schaltrades 5 befinden sich die Aussparungen 506, 507 im Bereich zwischen den beiden radialen Schlitzen 504, 505 für den Eingriff der Riegel 17a, 17b. Das Schaltrad 5, die Riegel 17a, 17b werden von dem Gehäuseteil 1a aufgenommen bzw. in dieses eingesetzt. Die Riegel 17a, 17b sind zueinander spiegelsymmetrisch als linker und rechter Riegel ausgebildet und mit je einer den beiden Bewegungsrichtungen des Betätigers zugeordneten schrägen Gleitfläche 173a, 173b beidseitig der zentralen Rastnase 172 ausgebildet. Diese schräger Gleitflächen 173a, 173b sind jeweils um 90° zueinander versetzt am Riegel angeordnet. Die Gleitflächen verlaufen unter 45° in bezug auf die Bewegungsrichtung des Betätigers bzw. die Stirnflächen des Schaltrades. Die Riegel 17a, 17b werden in Führungsnuten 102 des Gehäuseteiles 1a mit Führungsstegen 176, beispielsweise drei über den Umfang verteilt, geführt und sind damit parallel zur Wellenachse 51 des Schaltrades verschiebbar. Die Federbelastung der Riegel 17a, 17b wird mittels einer einzigen Druckfeder erreicht, die oberseitig der Riegel 17a, 17b diese übergreifend an je einem Vorsprung 177 der Riegel befestigt ist. Die Entriegelung, d.h. das Auseinanderbewegen, der Riegel 17a, 17b erfolgt dann entgegen dem Federdruck der Druckfeder 19.

Die Wirkverbindung mit dem Stößel 4 wird über das Pleuel 15 mit dem Schaltrad hergestellt, das Pleuel 15 ist über Gelenkbolzen 151, 152 mit dem Schaltrad bzw. Stößel verbunden. Um bei Totpunktlage des Pleuels bei Entlastung eine Bewegung des Pleuels aus der Totpunktlage zu ermöglichen, ist die koaxial zur Wellenachse 51 angeordnete Drehfeder 54 in dem Schaltrad angeordnet, die nur zum Überwinden des Totpunktes des Pleuels wirksam wird. Sobald das Pleuel außerhalb der Totpunktlage bewegt ist, übt die Drehfeder 54 keine Wirkung mehr aus.

Der Stößel 4 ist an seinem unteren Ende, an dem er mit der Kontaktbrücke, die die Kontakte trägt, in Wirkverbindung tritt mit einer Ringnut 43 ausgestattet. In der gezeigten Darstellung nach Figur 11a ist der Stößel in Schnittdarstellung gezeichnet. Die Ringnut 43 ermöglicht, daß der Stößel in dem Kontaktträger um seine Längsachse gedreht werden kann. Dies wiederum hat zur Folge, daß der gesamte Antriebskopf aus Gehäuseteil 1a mit Schaltrad und Verriegelungseinrichtung einschließlich Stößel um die Stößelachse gedreht werden kann, so daß der zugehörige Deckel mit den Öffnungen für den Eingriff des Betätigers in eine andere Position verlagert werden kann.

Die gemäß Figur 11a vormontierte Einheit des Schaltrades 5 mit Riegel, Druckfeder und Stößel wird dann in das den Schaltraum mit den Kontakten aufnehmende Gehäuseteil 1 gemäß Figur 11b in Pfeilrichtung eingesetzt.

Das Schaltrad wird dann oberseitig mit dem Gehäusedeckel 2 abgedeckt. Der Gehäusedeckel ist in dem gezeigten Beispiel mit zwei Gehäuseöffnungen 21 an zwei zueinander senkrechten Seiten ausgestattet, durch welche Betätiger 3, die mit einer Schutzabdeckung oder dergleichen fest verbunden sind, einführbar sind. In dem gezeigten Beispiel ist die Gehäuseöffnung 21 mit einem zusätzlichen Fensterrahmen 21a versehen, in dem der Durchtrittsschlitz paßgenau für den Betätiger 3 vorgesehen ist. Durch Einschieben des Betätigers 3, wie in den Figuren 10a bis e erläutert, werden zuerst die Riegel 17a, 17b entlang ihrer Gleitflächen 173 unter Spreizung der Feder 19 auseinandergedrückt, bis der Eingriff in das Schaltrad in einen Schlitz 504 bzw. 505 erfolgt, das Schaltrad durch Beiseiteschieben der Riegel entriegelt und das Schaltrad gedreht, der Stößel bewegt und der Schalter geschlossen werden kann.

Für eine Ausbildung des Sicherheitsschalters mit vierfacher Verriegelung, d.h. zwei Riegelpaaren, gemäß Figuren 3 und 4 wird nachfolgend die Ausgestaltung des Antriebes mit Schaltrad, Betätiger und Riegeln anhand der Figuren 5 bis 8 erläutert. Das in den Figuren 5a bis e dargestellte Schaltrad 5 ist für die Wirkübertragung zum Stößel mittels Rollen mit der Kurvenbahn 500, wie in den Figuren 1a, 1b erläutert, ausgebildet. Um eine exakte Rollenführung für zwei Rollen zu erhalten, ist die am Umfang umlaufende Rollenbahn durch einen mittleren Steg 511 unterteilt, der gleichzeitig eine seitliche Führung bildet. Das Schaltrad 5 ist für den Eingriff von vier Riegeln mit vier jeweils paarweise angeordneten Ausnehmungen 506 bis 509 ausgerüstet. Es ist auch möglich, an Stelle der Wirkverbindung mit dem Stößel über Rollen eine Wirkverbindung mittels Pleuel herzustellen, dann entfällt die spezielle Ausgestaltung der Kurvenbahn an dem Schaltrad 5, allerdings kann dann das Schaltrad auch nur in zwei Bewegungsrichtungen P1, P2 oder P3, P4 betätigt werden.

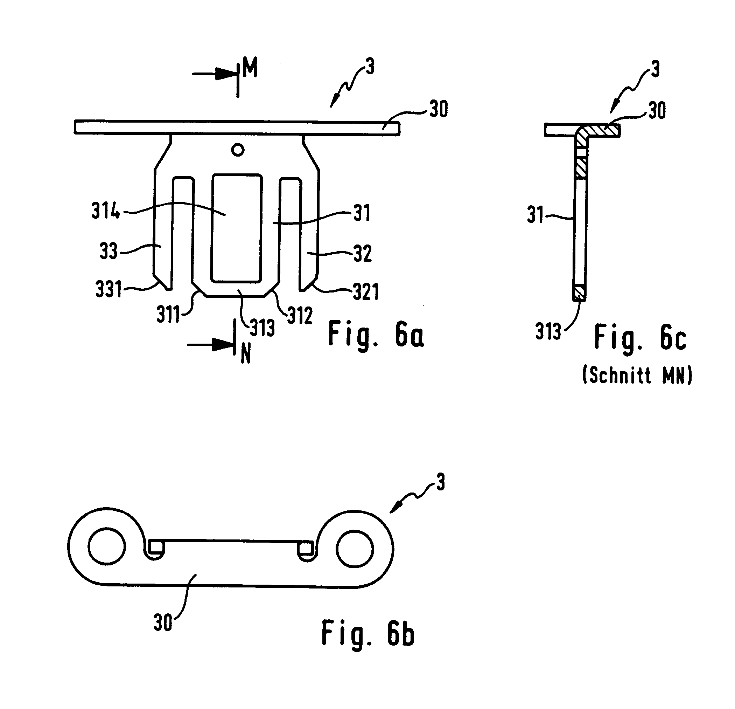

In den Figuren 6a bis c ist verschiedenen Ansichten der Betätiger 3, wie er bei einer Ausführung des Sicherheitsschalters gemäß Figur 3 und 4 einsetzbar ist, dargestellt. Wesentlich für die Betätigungsfunktion des Betätigers sind die Ausbildung des Quersteges 313 an einem rahmenartigen Mittelteil sowie die schrägen Gleitflächen 311, 312 sowie 321, 331 für den Wirkeingriff mit den Riegeln. Der Fuß 30 des Betätigers 3 kann entsprechend der Vorgabe der zu schützenden Einrichtung gestaltet sein. Die Gleitflächen können auch gegenüber dem Quersteg 313 vorgeschoben an dem Betätiger 3 ausgebildet sein.

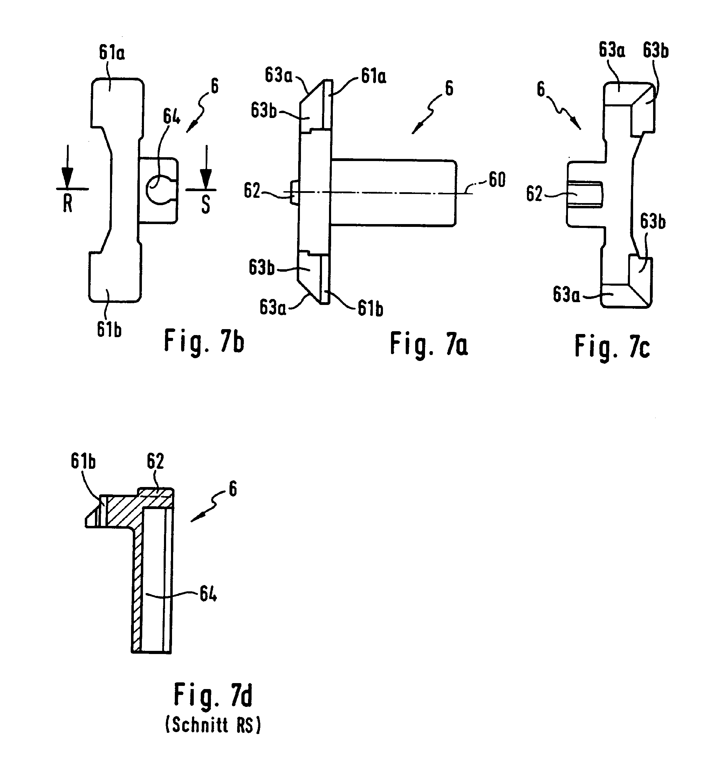

In der Figur 7a bis d ist beispielhaft der Riegel 6a bzw. 6b dargestellt, der mit einer kleinen Rastnase 62 in die der Wellenachse 50 näheren Aussparung 508 bzw. 509 des Schaltrades 5, siehe Figur 4, eingreift. Der Riegel ist in Längserstreckung unterseitig mit der Nut 64 zur Aufnahme der Druckfeder und ggf. einer Führung in dem Gehäuse ausgerüstet. Quer zur Längsachse 60 des Riegels sind die Riegelarme 61a, 61b ausgebildet, die an ihrer der Stirnseite des Schaltrades zugewandten äußeren Flächen mit schrägen Gleitflächen 63a, 63b, die unter 45° zur jeweiligen Bewegungsrichtung des Betätigers verlaufen, für den Wirkeingriff mit dem Betätiger ausgebildet sind.

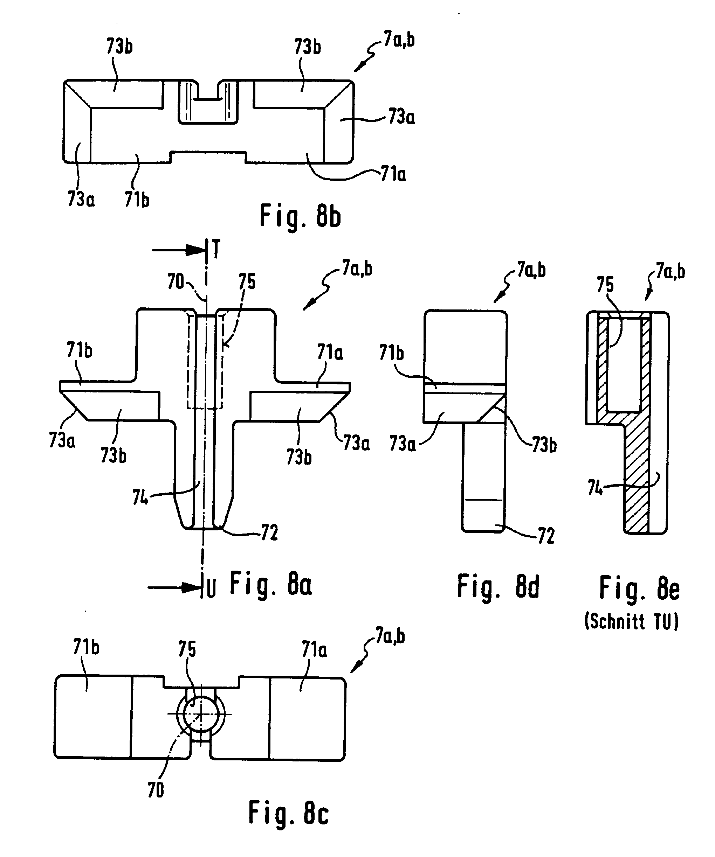

Das zweite Riegelpaar 7a, 7b, das mit einem Riegel 7 in den Figuren 8a bis e in Ansichten und Querschnitt dargestellt ist, weist analoge funktionsgerechte Gestaltungsmerkmale wie der Riegel 6a,b nach Figur 7 auf. Die äußere Gestalt ist der durch die andere Lage des Riegelpaares 7a,b in dem Gehäuse und zum Schaltrad 5 gemäß Figur 4 angepaßt. In Längserstreckung zur Achse 70 des Riegels 7 befindet sich am vorderen Ende die Rastnase 72 zum Einführen in die entsprechende Aussparung 506, 507 des Schaltrades. Senkrecht zur Längsachse 70 erstrecken sich die Riegelarme 71a, 71b, die wiederum an ihren Enden mit schrägen Gleitflächen 73a, 73b ausgerüstet sind. Auch der Riegel 7a, 7b weist bevorzugt eine Aufnahmenut 74 unterseitig zur Führung im Gehäuse sowie eine Aufnahmebohrung 75 für die Druckfeder auf. Für die Schaltbarkeit des Schaltrades in beiden Drehrichtungen sind die Gleitflächen der Riegel symmetrisch zur Riegelachse angeordnet und ausgebildet.

Bei Ausbildung eines Schaltrades gemäß der Erfindung ist eine hohe Sicherheit gegen Verdrehen gegeben, da im verriegelten Zustand, bei Schaltstellung offen, das Schaltrad nur um wenige Grad verdreht werden kann, so daß kein Einschalten des Schalters bei entferntem Betätiger möglich ist.

Die Ausbildung der Kurvenbahn 500 des Schaltrades bei Übertragung der Schaltbewegung mittels Rollen auf den Stößel ist durch die flache Gestaltung der Kalotte 500 für die Grundstellung des Schaltrades gemäß Figur 1a gesichert, so daß das Schaltrad in einem Winkelbereich von plus/minus 10° um die Mittelstellung noch von der Druckfeder, die auf den Stößel wirkt, in seine Grundstellung gebracht wird. Damit sind sehr stabile Lagerzustände für den eingeschalteten Zustand und den ausgeschalteten Zustand gewährleistet.

## Patentansprüche

1. Sicherheitsschalter zum zwangsweisen Abschalten der Stromzufuhr beim Entfernen einer Schutzabdeckung von einer Maschine oder dergleichen und Einschalten bei Schließen der Schutzabdeckung mittels eines mit der Schutzabdeckung fest verbundenen und mit dieser bewegbaren Betätigers (3) mit in einem mehrteiligen Gehäuse (1,2) untergebrachten elektrischen Kontakten (11,12) und einem Stößel (4), der durch ein von dem durch eine Öffnung des Gehäuses eingreifenden Betätiger (3) beaufschlagbares Antriebsorgan (5) betätigbar ist, insbesondere eines mit dem Stößel in Wirkverbindung stehenden verdrehbar auf einer in dem Gehäuse gelagerten Welle angeordneten Schaltrades und mit einer federbelasteten Verriegelungseinrichtung für das Antriebsorgan (5) zum Verhindern irregulärer Einschaltung des Schalters unter Umgehung des Betätigers bei entfernter Schutzabdeckung, **dadurch gekennzeichnet**, daß zu beiden Seiten des Schaltrades (5) mindestens je ein quer zur Bewegungsrichtung (P) des Betätigers bewegbarer federbelasteter Riegel (6a,b, 7a,b, 17a,b) in dem Gehäuse angeordnet ist und für die Blockierung des Schaltrades eine formschlüssige Verbindung der Riegel (6a,b;7a,b;17a,b) mit dem Schaltrad (5) im Bereich der Stirnseiten des Schaltrades (5) vorgesehen ist, derart, daß die Riegel sich im abgeschalteten, d.h. geöffneten Zustand des Schalters in einer das Schaltrad (5) und den Eingriffweg des Betätigers (3) blockierenden Position befinden und zum Zwecke des Schließens des Schalters die Riegel von dem beim Schließen der Schutzabdeckung in den Wirkeingriff mit dem Schaltrad (5) bewegbaren Betätiger (3) in eine das Schaltrad entsperrende Position entgegen der Federbelastung verschiebbar sind.

2. Sicherheitsschalter nach Anspruch 1, **dadurch gekennzeichnet**, daß im Bereich der Stirnseiten des Schaltrades (5) Ausnehmungen (506, 507; 508, 509) vorgesehen sind, in die die Riegel (6a,b;17a,b;7a,b) mit einem entsprechenden Vorsprung bzw. Rastnase (62;172;72) unter Federbelastung bei Entfernen des Betätigers (3) einrastbar sind.

3. Sicherheitsschalter nach einem der Ansprüche 1 oder 2, **dadurch gekennzeichnet**, daß die Riegel (6a,b;7a,b;17a,b) und der Betätiger (3) an den einander zugekehrten und in Wirkverbindung miteinander tretenden Flächen mit zueinander komplementären schrägen Gleitflächen (63a,b;73a,b;173a,b;311,312;321,331)ausgebildet sind, so daß die Riegel quer zur Bewegungsrichtung des Betätigers (3) auseinanderspreizbar bzw. aufeinander zu bewegbar sind.

4. Sicherheitsschalter nach Anspruch 1, **dadurch gekennzeichnet**, daß das Schaltrad (5) an seinem Umfang zwei sektorartige radiale Ausnehmungen (504, 505) zum Eingreifen des tangential auf das Schaltrad zu bewegbaren Betätigers (3) zum Verdrehen des Schaltrades aufweist.

5. Sicherheitsschalter nach einem der Ansprüche 1 bis 4, **dadurch gekennzeichnet**, daß die Riegel (6a,b;7a,b;17a,b) achsparallel zur Wellenachse (50) des Schaltrades (5) hin und her verschiebbar sind und die mit dem Betätiger (3) in Wirkverbindung tretenden Gleitflächen (63a,b;73a,b;173a,b) an den Riegeln in Richtung auf die Stirnseiten des Schaltrades (5) unter einem Winkel von 45° geneigt verlaufen und sich senkrecht zur Bewegungsrichtung des Betätigers (3) erstrecken.

6. Sicherheitsschalter nach einem der Ansprüche 1 bis 5, **dadurch gekennzeichnet**, daß der Betätiger (3) rahmenartig mit einem in Wirkverbindung mit dem Schaltrad tretenden sich parallel zur Wellenachse des Schaltrades (5) erstreckenden Quersteg (313) ausgebildet ist und die schrägen Gleitflächen (311,312) für ein Paar Riegel an den Ecken des Quersteges ausgebildet sind.

7. Sicherheitsschalter nach einem der Ansprüche 1 bis 5, **dadurch gekennzeichnet**, daß zwei Paar Riegel (6a,b;7a,b) beidseitig des Schaltrades (5) übereinander angeordnet vorgesehen sind.

8. Sicherheitsschalter nach einem der Ansprüche 1 bis 7, **dadurch gekennzeichnet**, daß der Betätiger (3) seitlich neben dem rahmenartigen Mittelteil mit Quersteg (313) je einen Steg (32, 33) aufweist, dessen Vorderkante als komplementäre Gleitfläche (321,331) zu dem zweiten Paar von Riegeln abgeschrägt ausgebildet ist.

9. Sicherheitsschalter nach einem der Ansprüche 1 bis 8, **dadurch gekennzeichnet**, daß für ein Paar Riegel (17a, 17b) eine gemeinsame die beiden Riegel verbindende Druckfeder (19) vorgesehen ist.

10. Sicherheitsschalter nach einem der Ansprüche 1 bis 9, **dadurch gekennzeichnet**, daß die Wirkverbindung zwischen Schaltrad (5) und Stößel (4) mittels eines außermittig am Schaltrad angreifenden Pleuels (15) hergestellt ist.

11. Sicherheitsheitsschalter nach Anspruch 10, **dadurch gekennzeichnet**, daß das Schaltrad (5) mit einer koaxial zur Wellenachse (50) des Schaltrades angeordneten Drehfeder (54) ausgerüstet ist, die in Totpunktlage des Pleuels (15) wirksam ist.

12. Sicherheitsschalter nach einem der Ansprüche 1 bis 11, **dadurch gekennzeichnet**, daß für die Betätigung des Schaltrades (5) in zwei zueinander senkrechten unabhängigen Bewegungsrichtungen durch einen Betätiger (3) die Riegel (17a, 17b) spiegelsymmetrisch zueinander als linker und rechter Riegel mit je zwei gegeneinander um 90° versetzten je zu einer Seite der Riegelachse (70) angeordneten Gleitflächen (173a, 173b) ausgerüstet sind.

13. Sicherheitsschalter nach einem der Ansprüche 1 bis 12, **dadurch gekennzeichnet**, daß der Stößel (4) in einem die Kontakte tragenden Kontaktträger (41) um seine Stößelachse (42) drehbar gelagert ist.

14. Sicherheitsschalter nach Anspruch 13, **dadurch gekennzeichnet**, daß das Schaltrad (5) mit Verriegelungseinrichtung und Stößel um 90° um die Stößelachse (42) gedreht in verschiedenen Positionen in das Gehäuse mit den Kontakten einsetzbar ist.

15. Sicherheitsschalter nach einem der Ansprüche 1 bis 9, **dadurch gekennzeichnet**, daß die Wirkverbindung zwischen Schaltrad (5) und Stößel (4) mittels an dem Stößel drehbar auf einer in seitlich parallel zur Stößelbewegung verlaufenden Nuten des Gehäuses geführten Achse gelagerten Rollen (14) hergestellt ist, die mit der über einen Teil des Umfangs des Schaltrades ausgebildeten drei Kalotten aufweisenden Kurvenbahn (500) drei stabile Lagerzustände bilden, wobei das Schaltrad im Querschnitt betrachtet eine Symmetrieachse aufweist.

16. Sicherheitsschalter nach Anspruch 15, **dadurch gekennzeichnet**, daß die Riegel (6a,b, 7a,b) symmetrisch zu ihrer zur Wellenachse (50) des Schaltrades (5) parallelen Achse (60, 70) ausgebildet sind und beidseitig je zwei schräge zueinander um 90° versetzte Gleitflächen aufweisen.

## Claims

1. Safety switch for the automatic disconnection of the power supply when a protective cover is removed from a machine or similar, and for switching the power supply on when the protective cover is closed, by means of an actuator (3) which is connected fast to the protective cover and moves with this cover, having electrical contacts (11, 12) accommodated in a multi-part housing (1, 2) and a push rod (4) which can be actuated by a drive element (5) acted upon by the actuator (3) engaging through an opening in the housing, in particular a switch-actuating wheel operatively connected to the push rod and arranged for rotation on a shaft mounted in the housing, and having a spring-loaded locking device for the drive element (5) for preventing uncontrolled switching on of the switch with the actuator being by-passed when the safety cover is removed, characterised in that, on both sides of the switch-actuating wheel (5), there is arranged in the housing at least one respective spring-loaded bolt (6a,b, 7a,b, 17a,b), which can be moved transversely to the direction of movement (P) of the actuator, and, for locking the switch-actuating wheel, a form-closed connection of the bolts (6a,b; 7a,b; 17a,b) to the switch-actuating wheel (5) is provided in the region of the end faces of the switch-actuating wheel (5), so that, in the disconnected, that is to say, open state of the switch, the bolts are located in a position blocking the switch-actuating wheel (5) and the path of contact of the actuator (3) and, in order to close the switch, the bolts can be displaced by the actuator (3), which can move into operative engagement with the switch-actuating wheel (5) when the protective cover is closed, into a position which unlocks the switch-actuating wheel, against the spring loading.

2. Safety switch according to claim 1, characterised in that, in the region of the end faces of the switch-actuating wheel (5), there are provided recesses (506, 507; 508, 509) in which the bolts (6a,b; 17a,b; 7a,b) can be locked home by means of a corresponding projection or locating catch (62; 172; 72) under spring loading on removal of the actuator (3).

3. Safety switch according to either one of claims 1 or 2, characterised in that the bolts (6a,b; 7a,b; 17a,b) and the actuator (3) are formed on the mutually facing surfaces which come into operative contact with each other with mutually complementary inclined sliding surfaces (63a,b; 73a,b; 173a,b; 311, 312; 321, 331), so that the bolts can move apart or towards each other, transversely to the direction of movement of the actuator (3).

4. Safety switch according to claim 1, characterised in that, on its periphery, the switch-actuating wheel (5) has two sector-shaped radial recesses (504, 505) for engaging the actuator (3), which can move tangentially towards the switch-actuating wheel, for rotation of the switch-actuating wheel.

5. Safety switch according to one of claims 1 to 4, characterised in that the bolts (6a,b; 7a,b; 17a,b) can be displaced backwards and forwards parallel to the shaft axis (50) of the switch-actuating wheel (5), and the sliding surfaces (63a,b; 73a,b; 173a,b) of the bolts, which surfaces come into operative contact with the actuator (3), are inclined at an angle of 45° and run in the direction of the end faces of the switch-actuating wheel (5), and extend perpendicularly to the direction of movement of the actuator (3).

6. Safety switch according to one of claims 1 to 5, characterised in that the actuator (3) is formed in the shape of a frame having a transverse cross-piece (313) coming into operative contact with the switch-actuating wheel and extending parallel to the shaft axis of the switch-actuating wheel (5), and the inclined sliding surfaces (311, 312) are formed for a pair of bolts at the corners of the transverse cross-piece.

7. Safety switch according to one of claims 1 to 5, characterised in that there are provided two pairs of bolts (6a,b; 7a,b) arranged one above another on both sides of the switch-actuating wheel (5).

8. Safety switch according to one of claims 1 to 7, characterised in that the actuator (3) has at the side, besides the frame-shaped middle part having the transverse cross-piece (313), a respective cross-piece (32, 33), the front edge of whcih is formed as a complementary sliding surface (321, 331) which is inclined relative to the second pair of bolts.

9. Safety switch according to one of claims 1 to 8, characterised in that, for a pair of bolts (17a, 17b), there is provided a common pressure spring (19) connecting the two bolts.

10. Safety switch according to one of claims 1 to 9, characterised in that the operative connection between the switch-actuating wheel (5) and the push rod (4) is produced by means of a piston rod (15) acting eccentrically on the switch-actuating wheel.

11. Safety switch according to claim 10, characterised in that the switch-actuating wheel (5) is equipped with a torsion spring (54), which is arranged coaxially with the shaft axis (50) of the switch-actuating wheel and is effective in the dead-centre position of the piston rod (15).

12. Safety switch according to one of claims 1 to 11, characterised in that, for actuating the switch-actuating wheel (5) in two independent directions of movement perpendicular to each other by means of an actuator (3), the bolts (17a, 17b) are provided in a mirror-symmetrical manner in relation to each other as a left-hand and a right-hand bolt with two sliding surfaces (173a, 173b) offset relative to each other by 90° and arranged one on either side of the bolt axis (70).

13. Safety switch according to one of claims 1 to 12, characterised in that the push rod (4) is mounted in a contact carrier (41) carrying the contacts, so that it can rotate around the push rod axis (40).

14. Safety switch according to claim 13, characterised in that the switch-actuating wheel (5) can be inserted together with the locking device and push rod in various positions in the housing having the contacts, so that it is rotated by 90° around the push rod axis (40).

15. Safety switch according to one of claims 1 to 8, characterised in that the operative contact between the switch-actuating wheel (5) and the push rod (4) is produced by means of rollers (14) rotatably mounted on the push rod on a shaft guided in grooves running along the side of the housing and parallel to the movement of the push rod, these rollers forming three stable bearing states with the curved running surface (500) which is formed over part of the periphery of the switch-actuating wheel and has three domed sections, whereby the switch-actuating wheel, considered in cross section, has one axis of symmetry.

16. Safety switch according to claim 15, characterised in that the bolts (6a,b, 7a,b) are formed symmetrically relative to their axis (60, 70), which is parallel to the shaft axis (50) of the switch-actuating wheel (5), and have on both sides two respective inclined sliding surfaces offset relative to each other by 90°.

## Revendications

1. Contacteur de sécurité pour le débranchement obligatoire de l'amenée de courant lors de l'enlèvement d'un capot de protection d'une machine ou similaire, et de branchement lors de la fermeture du capot de protection à l'aide d'un dispositif d'actionnement (3) solidaire du capot de protection et se déplaçant avec celui-ci avec des contacts électriques (11,12) installés dans un boîtier en plusieurs pièces (1,2) et un coulisseau (4) pouvant être actionné par un organe d'actionnement (5) actionné par un dispositif d'actionnement (3) traversant une ouverture du boîtier, et en particulier à l'aide d'une roue de commutation disposée sur un axe maintenu à rotation dans le boîtier et coopérant avec le coulisseau, et avec un dispositif de verrouillage de l'organe d'entraînement (5) placé sous la contrainte d'un ressort et empêchant lorsque le capot de protection est enlevé l'enclenchement non autorisé du contacteur, c'est-à-dire autrement que par le dispositif d'actionnement, caractérisé en ce que de chaque côté de la roue de commutation (5) au moins un verrou à ressort (6a, b, 7a, b, 17a, b) mobile dans une direction transversale à la direction (P) de déplacement du dispositif d'actionnement est disposée dans le boîtier et que pour le verrouillage de la roue de commutation est prévue une liaison géométrique du verrou (6a, b; 7a, b; 17a, b) avec la roue de commutation (5), au voisinage des faces frontales de la roue de commutation (5), de telle sorte que lorsque le contacteur est en position débranchée, c'est-à-dire ouverte, les verrous se trouvent en une position immobilisant la roue de commutation (5) et le parcours d'accrochage du dispositif d'actionnement (3), et que pour fermer le contacteur les verrous peuvent être déplacés en opposition à la contrainte du ressort dans une position débloquant la roue de commutation, par le dispositif d'actionnement (3) pouvant être déplacé lors de la fermeture du capot de protection dans une position d'accrochage de la roue de commutation (5).

2. Contacteur de sécurité selon la revendication 1, caractérisé en ce qu'au voisinage des faces frontales de la roue de commutation (5) sont prévues des découpes (506,507; 508,509) dans lesquelles les verrous (6a, b; 7a, b; 17 a, b) peuvent s'encliqueter sous la contrainte d'un ressort par une saillie ou un nez d'encliquetage correspondant (62; 172; 72) lors de l'enlèvement du dispositif d'actionnement (3).

3. Contacteur de sécurité selon l'une des revendications 1 ou 2, caractérisé en ce que les verrous (6a, b; 7a, b; 17a, b) et le dispositif d'actionnement (3) présentent sur leurs surfaces tournées l'une vers l'autre et coopérant l'une avec l'autre des surfaces de glissement inclinées et complémentaires l'une de l'autre (63a, b; 73a, b; 173a, b; 311, 312; 321, 331), de sorte que les verrous peuvent être éloignés ou rapprochés l'un de l'autre transversalement à la direction de déplacement du dispositif d'actionnement.

4. Contacteur de sécurité selon la revendication 1, caractérisé en ce que la roue de commutation (5) présente à sa périphérie deux découpes radiales en forme de secteur (504, 505) servant à accrocher le dispositif d'actionnement (3) pouvant se déplacer tangentiellement à la roue de commutation, en vue de faire tourner la roue de commutation.

5. Contacteur de sécurité selon l'une des revendications 1 à 4, caractérisé en ce que les verrous (6a, b; 7a, b; 17a, b) peuvent être déplacés en va-et-vient suivant des axes parallèles à l'axe (50) de l'arbre de la roue de commutation (5), en ce que les surfaces de glissement (63a, b; 73a, b; 172a, b) coopérant avec le dispositif d'actionnement (3) s'étendent sur les verrous suivant un angle de 45° par rapport aux surfaces frontales de la roue de commutation (5), et s'étendent perpendiculairement à la direction de déplacement du dispositif d'actionnement (3).

6. Contacteur de sécurité selon l'une des revendications 1 à 5, caractérisé en ce que le dispositif d'actionnement (3) présente la forme d'un cadre dont une traverse (313) coopérant avec la roue de commutation s'étend parallèlement à l'axe de l'arbre de la roue de commutation (5), les surfaces inclinées de glissement (311, 312) pour une paire de verrous étant formées sur les coins de la traverse.

7. Contacteur de sécurité selon l'une des revendications 1 à 6, caractérisé en ce que deux paires de verrous (6a, b; 7a, b) sont prévues et sont disposées l'une au-dessus de l'autre de chaque côté de la roue de commutation (5).

8. Contacteur de sécurité selon l'une des revendications 1 à 7, caractérisé en ce que les dispositifs d'actionnement (3) présentent de chaque côté de la pièce médiane en forme de cadre à traverses (313) une branche (32, 33) dont le bord avant est configuré en forme de surfaces de glissement (321, 331) complémentaires et obliques par rapport à la seconde paire de verrous.

9. Contacteur de sécurité selon l'une des revendications 1 8, caractérisé en ce qu'un ressort de compression (19) commun et reliant les deux verrous est prévu pour une des paires de verrous (17a, 17b).

10. Contacteur de sécurité selon l'une des revendications 1 à 9, caractérisé en ce que la coopération entre la roue de commutation (5) et le coulisseau (4) est réalisée à l'aide d'une bielle (15) accrochant la roue de commutation par l'extérieur.

11. Contacteur de sécurité selon la revendication 10, caractérisé en ce que la roue de commutation (5) est équipée d'un ressort de compression (54) disposé coaxialement à l'axe (50) de la roue de commutation, et actif lorsque la bielle (15) est au point mort.

12. Contacteur de sécurité selon l'une des revendications 1 à 11, caractérisé en ce que pour l'actionnement de la roue de commutation (5) dans deux directions de déplacement indépendantes et perpendiculaires l'une à l'autre par un dispositif d'actionnement (3), les verrous (17a, 17b) de forme mutuellement énantiomorphe, pour constituer un verrou gauche et un verrou droit, sont dotés de deux surfaces de glissement (173a, 173b) décalées l'une par rapport à l'autre de 90° et disposées chacune d'un côté de l'axe (70) du verrou.

13. Contacteur de sécurité selon l'une des revendications 1 à 12, caractérisé en ce que le coulisseau (4) est maintenu à rotation autour d'un axe (42) de coulisseau dans un porte-contacts (41) portant les contacts.

14. Contacteur de sécurité selon la revendication 13, caractérisé en ce que la roue de commutation (5) peut être insérée en différentes positions dans le boîtier à contacts avec le dispositif de verrouillage et le coulisseau décalé de 90° autour de l'axe (42) du coulisseau.

15. Contacteur de sécurité selon l'une des revendications 1 à 9, caractérisé en ce que la coopération entre la roue de commutation (5) et le coulisseau (4) est réalisée à l'aide de roulettes (14) maintenues sur le coulisseau à rotation autour d'un axe introduit dans des rainures s'étendant dans le boîtier en position latérale parallèle au déplacement du coulisseau, ces roulettes (14) formant trois positions de fixation stables avec la piste incurvée (500) formée sur une partie du périmètre de la roue de commutation et présentant trois cuvettes, la roue de commutation présentant en coupe transversale un axe de symétrie.

16. Contacteur de sécurité selon la revendication 15, caractérisé en ce que les verrous (6a, b; 7a, b) sont configurés de manière à être symétriques par rapport à leur axe (60, 70) parallèles à l'axe (50) de la roue de commutation (5) et qu'ils présentent de chaque côté deux surfaces de glissement inclinées formant entre elles un angle de 90°.
